# EUROPEAN PATENT APPLICATION

(11) **EP 4 421 049 A1**
(43) Date of publication of application: **28.08.2024**
(21) Application number: 23158763.5
(22) Date of filing: 27.02.2023
(51) Int. Cl.: C04B 28/04, E04C 2/06

(54) **CLADDING PANEL**

(71) Applicant: McCarthy, Gerard, H62 PK51 Co. Galway (IE); McCaughey, Peter, A91 A037 Dundalk Co. Louth (IE)
(72) Inventor: McCarthy, Gerard, H62 PK51 Co. Galway (IE); McCaughey, Peter, A91 A037 Dundalk Co. Louth (IE)
(74) Representative: Schütte, Gearoid

(57) **Abstract**

Cladding panels of the invention are formed from raw materials comprising by weight 40-50% cement, 20-30 % water, 10-25% silica sand, 2-3% kaolin, 2-3% silica fume, 1-1.5% light aggregate material, 0.45-0.55% plasticizer, 0.1-0.2% microfibres and 0.05-0.2% foaming agent. Optionally latex may also be included as a raw material in the amount 0.4-0.6% by weight.

## Description

### Background of the Invention

Currently, external walls of buildings are constructed using masonry on the outer leaf. This requires the services of a skilled block layer for the laying of these blocks and is a relatively slow and time-consuming method of construction. It is known to use external wall installation systems (EWS) to replace masonry blocks. However, this construction method also requires a certain skill set to do this. The EWS is then finished with a render.

The present invention is directed towards providing a cladding panel which addresses these problems.

### Summary of the Invention

According to the invention there is provided a cladding panel formed from raw materials including 40-50% cement, 20-30% water, 10-25% silica sand, 2-3% kaolin, 2-3% silica fume, 1-1.5% light aggregate material, 0.45-0.55% plasticizer, 0.1-0.2% microfibres and 0.05-0.2% foaming agent, said percentages being by weight.

In one embodiment of the invention the raw materials further include 0.4-0.6% latex.

In another embodiment the raw materials include equal amounts of latex and plasticizer.

In another embodiment the raw materials include equal amounts of kaolin and silica fume.

In another embodiment the light aggregate comprises expanded polystyrene beads.

In another embodiment the expanded polystyrene beads comprise expanded polystyrene beads in two or more different sizes.

In another embodiment the expanded polystyrene beads are selected from two or more of 10-12 kg/m³ beads, 8-10 kg/m³ beads and 6-8 kg/m³ beads.

In another embodiment the microfibres comprise polyamide fibres.

In another embodiment the microfibres are 6-12 mm polyamide fibres.

In another embodiment the cement comprises 52,5 or 42,5 Portland cement.

In another embodiment the silica sand has a nominal size of less than 400 microns.

In another embodiment the raw materials include a colourant. Any desired colour may be used to achieve a desired decorative effect.

In another embodiment the panel includes a reinforcement layer.

In another embodiment the reinforcement layer is a fibre mesh.

### Brief Description of the Drawings

The invention will be more clearly understood from the following description of some embodiments thereof, given by way of example only, with reference to the accompanying drawings, in which:
Fig. 1 is a table showing various combinations of raw materials used to form cladding panels of the invention;
Fig. 2 is a table of raw materials used to form a first cladding panel according to a first embodiment of the invention; and
Fig. 3 is a table of raw materials used to form a second cladding panel according to a second embodiment of the invention.

### Detailed Description of the Preferred Embodiments

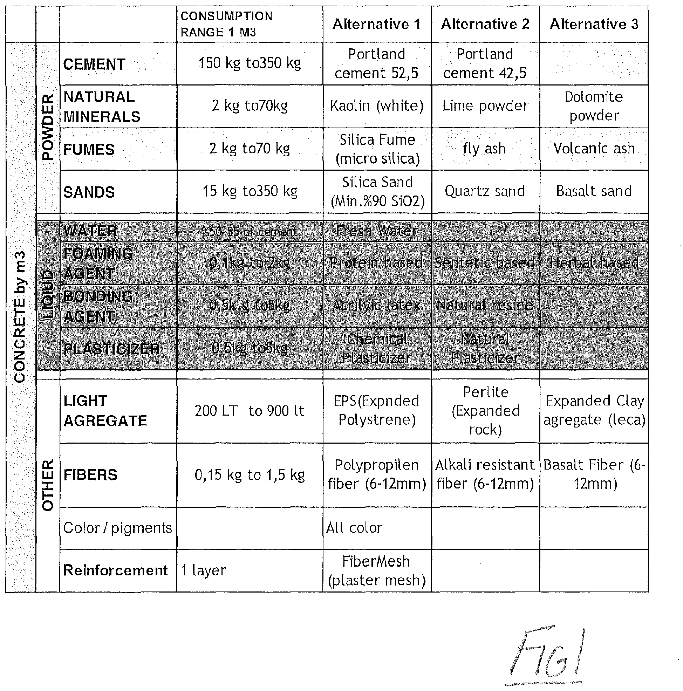

Referring to the drawings, and initially to Fig. 1 thereof, there is provided a table showing various combinations of raw materials used to form cladding panels of the invention. The table in Fig. 1 shows the quantities of various raw materials and alternative raw materials that can be used to form cladding panels of the invention.

The cladding panels of the invention are formed from raw materials comprising by weight 40-50% cement, 20-30 % water, 10-25% silica sand, 2-3% kaolin, 2-3% silica fume, 1-1.5% light aggregate material, 0.45-0.55% plasticizer, 0.1-0.2% microfibres and 0.05-0.2% foaming agent. Optionally latex may also be included as a raw material in the amount 0.4-0.6% by weight.

The selected raw materials are delivered into a mixer and mixed together to form an homogenous slurry. The homogenous slurry is then poured into a shallow mould having a depth corresponding to the desired thickness of the cladding panel. Any suitable panel thickness may be provided, such as 30 mm or 50 mm to give two useful examples. The slurry is allowed to dry within the mould to form the cladding panel which is then removed from the mould. Alternatively, the homogenous slurry may be poured into a master mould, which may for example be of size 1.5 m in width, up to 3 m in length and 1.5 m in height. This may then be cut into individual board sizes, after a period of time, depending on curing.

### Example 1

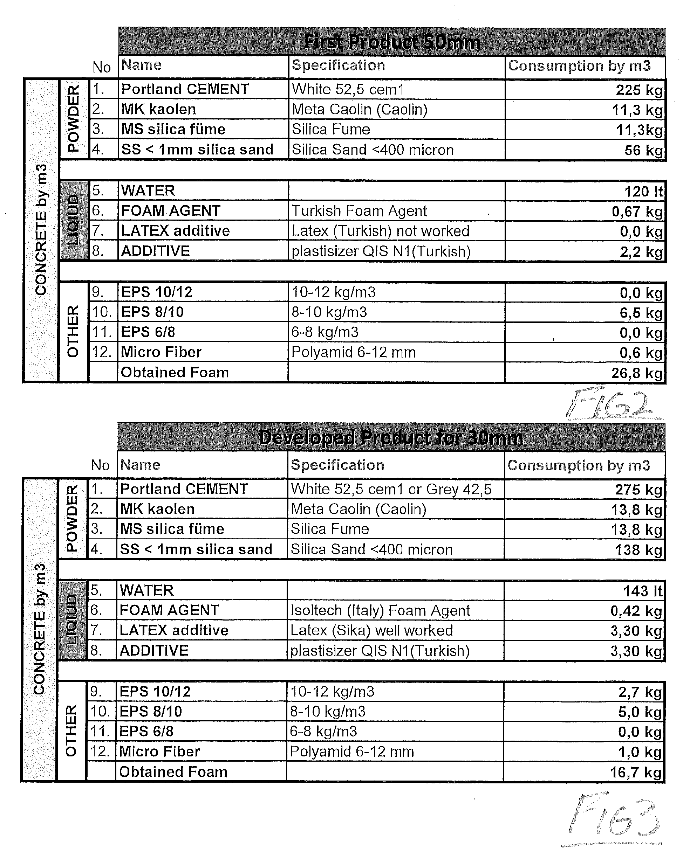

Fig. 2 shows the composition of raw materials used to form a first cladding panel of the invention having a thickness of 50 mm. In this case the raw materials include about 49% Portland cement, 26 % water, 12% silica sand, 2.4% kaolin, 2.4% silica fume, 1.4% expanded polystyrene beads, 0.47% plasticizer QIS N1 (Turkish), 0.13% polyamide micro fibres and 0.14% Turkish foaming agent.

### Example 2

Fig. 3 shows the composition of raw materials used to form a second cladding panel of the invention having a thickness of 30 mm. In this case the raw materials include about 45% Portland cement, 23 % water, 22.4% silica sand, 2.24% kaolin, 2.24% silica fume, 1.25% expanded polystyrene beads, 0.54% plasticizer QIS N1 (Turkish), 0.54% latex, 0.16% polyamide micro fibres and 0.07% Isoltech (Italy) foaming agent.

The panels of the invention are non-combustible lightweight panels that also have high acoustic values. The cladding panels are manufactured as indicated above with a combined mix of specific raw materials, e.g. specific aggregates and cement binding materials along with specific binding agents. The combination and ratio of these raw materials can be changed or removed depending on the required application of the cladding panel. Because of the combination and the ratio of these raw materials the panel has a low water absorbency. Different colouring agents can be added to the raw materials in the production of coloured rain screen cladding panels.

It will be appreciated that the cladding panel of the invention will have a significant commercial advantage over the traditional form of construction, e.g. block or brick, as it is lighter and cheaper per square metre and does not require fitting by a skilled block layer.

Currently, external walls of buildings are constructed using masonry on the outer leaf. This needs a specific skill set for the laying of these blocks. The cladding panel of the invention will remove the necessity for this skill set. This will reduce the time involved in building.

The cladding panels can also be fitted onto a timber frame, steel frame or masonry external wall this will provide a fully clad external wall in the factory or on site. The cladding panels can also be fitted on-site afterwards to a steel frame, timber frame or masonry external wall panel.

The cladding panel will remove the need for skilled labour to install the external panel to the building. It is approximately 80% lighter than traditional masonry block work. Each cladding panel will cover approximately 1.1 m² at a time. The cladding panel weighs approximately 22kg per m². The cladding panels can be made bigger or smaller depending on specific project requirements.

The cladding panels have excellent fire resistance and provide a very robust façade.

In this specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail within the scope of the appended claims.

## Claims

1. A cladding panel formed from raw materials including 40-50% cement, 20-30% water, 10-25% silica sand, 2-3% kaolin, 2-3% silica fume, 1-1.5% light aggregate material, 0.45-0.55% plasticizer, 0.1-0.2% microfibres and 0.05-0.2% foaming agent, said percentages being by weight.

2. The cladding panel as claimed in claim 1, wherein the raw materials further include 0.4-0.6% latex.

3. The cladding panel as claimed in claim 2, wherein the raw materials include equal amounts of latex and plasticizer.

4. The cladding panel as claimed in any preceding claim, wherein the raw materials include equal amounts of kaolin and silica fume.

5. The cladding panel as claimed in any preceding claim, wherein the light aggregate comprises expanded polystyrene beads.

6. The cladding panel as claimed in claim 5, wherein the expanded polystyrene beads comprise expanded polystyrene beads in two or more different sizes.

7. The cladding panel as claimed in claim 5 or claim 6, wherein the expanded polystyrene beads are selected from two or more of 10-12 kg/m³ beads, 8-10 kg/m³ beads and 6-8 kg/m³ beads.

8. The cladding panel as claimed in any preceding claim, wherein the microfibres comprise polyamide fibres.

9. The cladding panel as claimed in claim 8, wherein the microfibres are 6-12 mm polyamide fibres.

10. The cladding panel as claimed in any preceding claim, wherein the cement comprises 52,5 or 42,5 Portland cement.

11. The cladding panel as claimed in any preceding claim, wherein the silica sand has a nominal size of less than 400 microns.

12. The cladding panel as claimed in any preceding claim, wherein the raw materials include a colourant.

13. The cladding panel as claimed in any preceding claim, wherein the panel includes a reinforcement layer.

14. The cladding panel as claimed in claim 13, wherein the reinforcement layer is a fibre mesh.
